# NEUE EUROPÄISCHE PATENTSCHRIFT

(11) **EP 0 798 159 B2**
(45) Veröffentlichungstag und Bekanntmachung des Hinweises auf die Entscheidung über den Einspruch: **19.03.2003**
(45) Hinweis auf die Patenterteilung: 17.05.2000
(21) Anmeldenummer: 97103665.2
(22) Anmeldetag: 05.03.1997
(51) Int. Cl.: B60N 3/02

(54) **Haltegriff aus Kunststoff**
Plastic handgrip
Poignée en plastique

(30) Priorität: 25.03.1996 DE 19611724
(43) Veröffentlichungstag der Anmeldung: 01.10.1997
(73) Patentinhaber: TRW Automotive Electronics & Components GmbH & Co. KG, 78315 Radolfzell (DE)
(72) Erfinder: Wagner, Jörg, 67663 Karlsruhe (DE)
(74) Vertreter: Schieschke, Klaus, Dipl.-Ing.

(56) Entgegenhaltungen:
- EP-A- 0 507 082
- EP-A2- 0 356 919
- EP-B1- 0 041 609
- WO-A-96/17178
- DE-A- 4 309 024
- DE-B- 2 906 288
- DE-U- 9 407 276
- FR-A- 2 428 540
- JP-A- 5 037 564
- JP-A- 7 041 029
- US-A- 4 981 322
- K.Ehrenspiel und A. Schlüter, "Gestalten von Schnappverbindungen fpr Montagegerechte produkte" Hanser-Verlag, 1995

## Beschreibung

Die Erfindung bezieht sich auf einen Haltegriff aus Kunststoff, dessen beide Endbereiche jeweils über ein Lagerteil in einer Trägeröffnung befestigbar sind, wobei jedes Lagerteil mindestens einen die Trägeröffnung hintergreifenden, in Spreizstellung gehaltenen Rastbereich aufweist, nach dem Oberbegriff des Anspruchs 1.

Als allgemeiner Stand der Technik ist bereits ein derartiger Haltegriff bekannt, siehe DE 4 309 024 A, welcher beispielsweise an einer Kraftfahrzeugkarosserie befestigbar ist. Diese Konstruktion ist bau- und raumaufwendig.

Nächstkommender Stand der Technik ist ein Haltegriff aus Kunststoff, bei welchem das Lagerteil als Rastbereich zwei einander gegenüberliegende Eingriffsstege aufweist, welche in Spreizstellung durch einen gesicherten Arretierbolzen die Trägeröffnung hintergreifen (US 4,981,322 A). Beide Eingriffsstege sind gleichartig gestaltet und werden durch den Arretierbolzen hinter einer Trägeröffnung auseinander gedrückt.

Im einzelnen zeigt die US-A-4981322 einen Haltegriff aus Kunststoff, dessen beide Endbereiche jeweils über ein Lagerteil in einer Trägeröffnung befestigbar sind, wobei jedes Lagerteil mindestens einen die Trägeröffnung hintergreifenden, in Spreizstellung gehaltenen Rastbereich aufweist und wobei
das Lagerteil als Rastbereich zwei einander gegenüber liegende Eingriffsstege besitzt,
wobei die Eingriffsstege in Spreizstellung durch einen gesicherten Arretierbolzen die Trägeröffnung hintergreifen und
wobei das Lagerteil unterhalb der beiden Eingriffsstege mit zwei im Abstand voneinander angeordneten Lagerstellen für einen die Endbereiche des zumindest teilweise schwenkbar ausgebildeten Haltegriffs durchsetzenden, federbeaufschlagten Lagerbolzen versehen ist.

Darüber hinaus ist ein Anbauteil zum Anschluss an eine Wandung, insbesondere Griff oder Armlehne zum Anschluss an ein Karosserieteil eines Kraftfahrzeuges bekannt (DE 290 62 88 A). Hier wird ein Griff durch zwei U-förmig ausgebildete Verbindungselemente gehalten, wobei ein Verbindungselement als Feder ausgebildet ist, die an ihrem freien Ende eine Abwinklung aufweist. Dieses federnd ausgebildete U-förmig gestaltete Verbindungselement ist nicht analog dem vorgenannten Stand der Technik durch einen Arretierbolzen gesichert.

Der vorliegenden Erfindung liegt demgegenüber die Aufgabe zugrunde, einen Haltegriff der eingangs genannten Art zu schaffen, welcher bei einfachem Aufbau und rascher Montage nur einen geringen Raum beansprucht.

Diese Aufgabe wird erfindungsgemäß mit den Merkmalen im kennzeichnenden Teil des Ansprüchs 1 gelöst.

Durch diese spezielle Gestaltung des Haltegriffs ergibt sich eine rasche Durchführbarkeit des Montagevorganges, wobei außerdem infolge des zumindest teilweise schwenkbar ausgebildeten Haltegriffs dieser in Ruhestellung nur wenig Raum beansprucht.

Das Lagerteil läßt sich durch die Trägeröffnung schieben und mit Hilfe des Arretierbolzens sichern, welcher sowohl den starren als auch den federnden Eingriffssteg jeweils innenseitig beaufschlagt.

Das Lagerteil kann in weiterer Ausgestaltung der Erfindung an der den Eingriffselementen abgewandten, von dem jeweiligen Endbereich bedeckbaren Seite mindestens einen Anschlagbereich zur Drehbegrenzung des Haltegriffs aufweisen. Hierbei kann jeder Endbereich des Haltegriffs als Anschlagbereich eine obere Anschlagschulter und eine untere, gewölbte im Bereich der Lagerstellen liegende Anschlagzone besitzen, welche stirnseitig eine Gegenfläche des Lagerteils bei aufgeklapptem Haltegriff beaufschlagt.

In weiterer Ausgestaltung der Erfindung kann jeder Endbereich des Haltegriffs mit einer Ausnehmung versehen sein, in welcher der mit dem Anschlagbere ich versehene hintere Bereich des jeweiligen Lagerteils aufnehmbar ist. Diese Ausnehmung kann in die gewölbte Anschlagzone übergehen, deren Stirnfläche die Gegenfläche des Lagerteils bei aufgeklapptem Haltegriff beaufschlagt. Die Ausnehmung übt damit Doppelfunktion aus, nämlich einmal Aufnahme eines Bereichs des Lagerteils und zum anderen Begrenzung der Anschlagfläche für die Schwenkbewegung des Haltegriffs.

Nach einem anderen Merkmal der Erfindung kann das Lagerteil zwischen dem federnden und starren Eingriffssteg eine rechteckige Durchgangsöffnung zur Einlagerung des im Querschnitt rechteckigen Hauptkörpers des Arretierbolzens aufweisen. Hierbei kann der Hauptkörper endseitig mit einer an dem hinteren Bereich des Lagerteils anliegenden Abschlußplatte und längsseitig jeweils mit einer federnden, in einer Rast des Lagerteils einlagerbaren Arretierzunge versehen sein. Die einander gegenüberliegenden Arretierzungen können verschiedene Längen aufweisen. Mit Hilfe dieser Arretierzungen ist es möglich, das Lagerteil funktionssicher innerhalb einer Trägeröffnung in Spreizstellung zu haltern und damit insgesamt den Haltegriff funktionssicher an dem Träger zu befestigen.

Die Erfindung wird nachfolgend anhand eines in der Zeichnung dargestellten Ausführungsbeispiels näher beschrieben. In der Zeichnung zeigen:
- Fig. 1: eine Vorderansicht des Haltegriffs, teils gebrochen,
- Fig. 2 und 3: jeweils eine schematische Seitenansicht des an einem Träger befestigten Haltegriffs in Ruhestellung bzw. in ausgeklappter Position.
- Fig. 4 und 5: zwei Verfahrensschritte zum Befestigen des Haltegriffs an einem Träger mit Hilfe von Eingriffselementen,
- Fig. 6: eine Seitenansicht eines Lagerteils
- Fig. 7: einen Mittelschnitt durch das Lagerteil nach Fig. 6,
- Fig. 8: eine Vorderansicht des Lagerteils nach Fig. 6 und 7,
- Fig. 9: eine Seitenansicht des Arretierbolzens,
- Fig. 10: eine Draufsicht auf den Arretierbolzen nach Fig. 9,
- Fig. 11: eine Vorderansicht des Arretierbolzens,
- Fig. 12: eine vergrößerte Ansicht eines Endbereichs des Haltegriffs nach Fig. 1 im eingebauten Zustand, teils gebrochen.

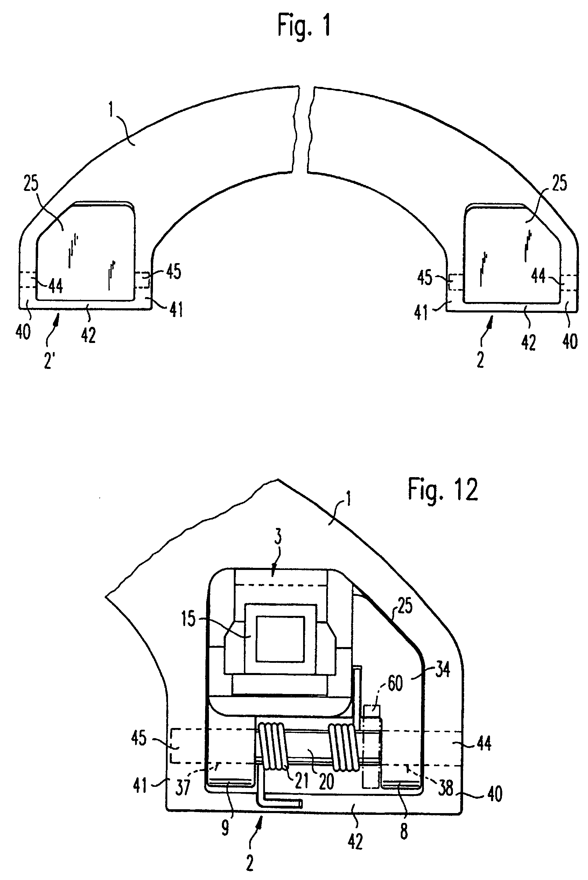

In Fig. 1 ist ein Haltegriff 1 aus Kunststoff dargestellt, welcher zwei Endbereiche 2 und 2' aufweist, die jeweils mit einer Ausnehmung 25 versehen sind. Diese Ausnehmung ist beidseitig jeweils von einer durch einen weiteren Steg 42 miteinander verbundenen Seitenwand 40, 41 begrenzt. Hierbei weist gemäß Fig. 12 die Seitenwand 40 jeweils eine Durchgangsöffnung 44 und die Seitenwand 41 eine koaxiale Öffnung 45 auf, welche beispielsweise als Sackloch ausgebildet sein kann. Beide Öffnungen 44 und 45 dienen zur Aufnahme eines Lagerbolzens 20 (Fig. 12).

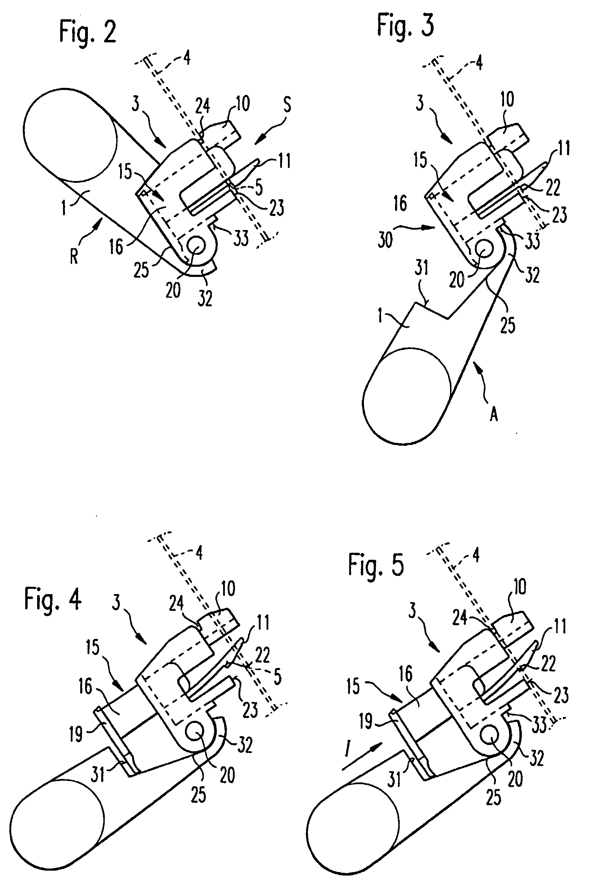

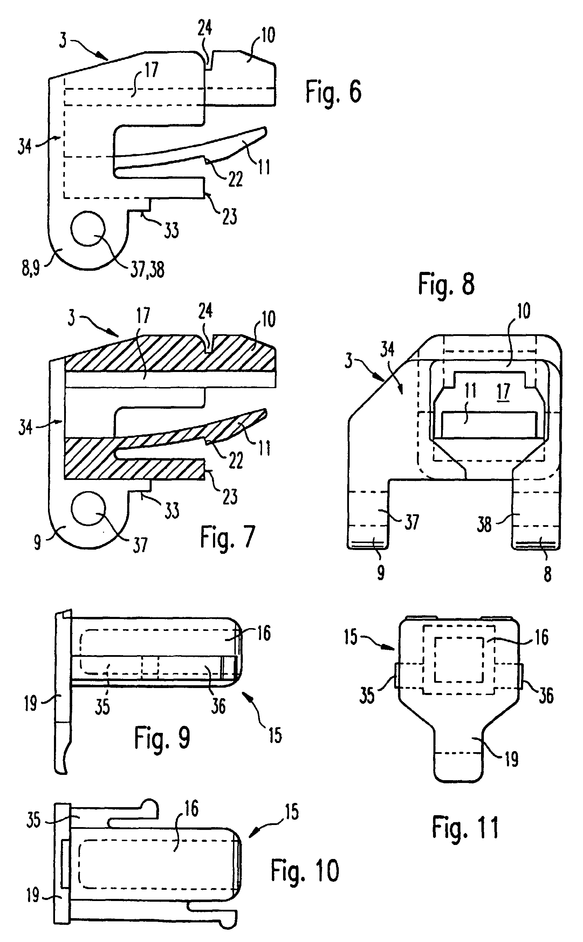

Aus Fig. 2 und 3 geht hervor, daß der Haltegriff 1 über ein Eingriffselement 3 und einen Arretierbolzen 15 an einem Träger 4 befestigt ist. Dieser Träger 4 weist eine Öffnung 5 auf. Das Lagerteil 3 besitzt als Rastbereich zwei einander gegenüberliegende Eingriffsstege 10 und 11, wobei aus Fig. 6 und 7 hervorgeht, daß der eine Eingriffssteg 10 als starres und der andere Eingriffssteg 11 als federndes Element ausgebildet ist. Der starre Eingriffssteg 10 besitzt nach Fig.5 und 6 eine Nut 24 auf, welche sich im hinteren Bereich befindet und bezüglich ihrer Breite auf die Dicke des Trägers abgestellt ist. Der federnde Eingriffssteg 11 besitzt analog zur Nut 24 eine Eingriffsschulter 22 und - dieser gegenüberliegend - eine Anschlagfläche 23. Beide Stege 10 und 11 sind im vorderen Bereich als Montagehilfe konisch zulaufend ausgebildet.

Aus Fig. 2 ist ersichtlich, daß sich die Nut 24 des starren Eingriffssteges 10 hinter der Öffnung 5 in den Träger 4 einlagert und daß - dieser Einlagerung gegenüberliegend - der federnde Eingriffssteg 11 in Spreizstellung S mit Hilfe eines Arretierbolzens 15 mit seiner Eingriffsschulter 22 eine Seite des Trägers 4 und mit der Anschlagfläche 23 die andere Seite des Trägers beaufschlagt. Damit ist durch den Arretierbolzen 15 das Lagerteil 3 einwandfrei in der Öffnung 5 des Trägers 4 befestigt.

Der Haltegriff 1 läßt sich aus einer in Fig. 2 in Seitenansicht schematisch dargestellten Ruhestellung R in eine in Fig. 3 dargestellte ausgeschwenkte Stellung A bewegen. Hierzu dreht sich der Haltegriff 1 im Gegenuhrzeigersinn um den Lagerbolzen 20, welcher Durchgangslöcher 37 und 38 in Lagerstellen 8 und 9 des jeweiligen Lagerteils 3 durchsetzt und in den Öffnungen 44 und 45 der Seitenwände 40 und 41 der Endbereiche 2 bzw. 2' des Haltegriffs 1 gelagert ist.

Jeder Endbereich des Haltegriffs 1 weist eine obere Anschlagschulter 31 und eine untere gewölbte, im Bereich der Lagerstellen 2,2' liegende Anschlagzone 32 auf, welche stirnseitig in der Stellung A' eine Gegenfläche 33 des Lagerteils 3 bei ausgeklapptem Haltegriff 1 nach Fig. 3 beaufschlagt. Das Lagerteil 3 besitzt an der den Eingriffselementen 10, 11 abgewandten Seite entsprechend einen Anschlagbereich 30 zur Drehbegrenzung des Haltegriffs 1.

In der in Fig. 2 dargestellten Ruhestellung R beaufschlagt die Anschlagschulter 31 des Haltegriffs 1 den oberen Bereich des Lagerteils 3 und die untere gewölbte Anschlagzone 32 überdeckt teilweise den unteren Bereich des Lagerteils 3.

In der in Fig. 3 dargestellten ausgeklappten Stellung A liegt die Anschlagschulter 31 des Haltegriffs 1 frei und die gewölbte Anschlagzone 32 überdeckt den hinteren unteren Bereich des Lagerteils 3. Hier ist die Gegenfläche 33 des Lagerteils 3 in Wirkung, welche von der Stirnfläche der gewölbten Anschlagzone 32 des Haltegriffs 1 beaufschlagt wird. Damit ist der Haltegriff in seiner ausgeschwenkten Position A einwandfrei gegen weiteres Verdrehen gesichert.

Aus Fig. 6, 7 und 8 geht hervor, daß das Lagerteil 3 zwischen dem starren Eingriffssteg 10 und dem federnden Eingriffssteg 11 eine rechteckige Durchgangsöffnung 17 aufweist. Der Querschnitt dieser Durchgangsöffnung 17 ist auf einen in Fig. 9, 10 und 11 dargestellten Arretierbolzen 15 abgestellt.

Unterhalb der rechteckigen Durchgangsöffnung 17 besitzt das Lagerteil 3 zwei Lagerstellen 8 und 9 mit den Durchgangsöffnungen 37 und 38 zum Durchtritt des Lagerbolzens 20.

Aus Fig. 8 geht hervor, daß das Lagerteil 3 jeweils asymmetrisch ausgebildet ist und eine Konfiguration aufweist, welche es ermöglicht, in die Ausnehmung 25 des jeweiligen Endbereichs 2 bzw. 2' des Haltegriffs 1 eingesetzt zu werden.

Der Arretierbolzen 15 besitzt einen im Querschnitt rechteckigen Hauptkörper 16, welcher in die Durchgangsöffnung 3 eingesetzt werden kann. Er ist vorzugsweise sacklochartig ausgebildet, um genügend Elastizität zu besitzen.

Endseitig ist dieser Hauptkörper 16 des Arretierbolzens 15 mit einer Abschlußplatte 19 versehen, welche an den hinteren Bereich 34 des Lagerteils 3 anlegbar ist. Längsseitig des Hauptkörpers 16 besitzt der Arretierbolzen 15 jeweils eine federnde, in eine Gegenrast des Lagerteils 3 einlagerbare Arretierzunge 35 und 36. Aus Fig. 10 geht hervor, daß die Arretierzungen 35 und 36 verschiedene Längen aufweisen können. Das Lagerteil 3 besitzt im Seitenbereich entsprechende Gegenrasten, hinter welchen die federnden Arretierzungen 35 und 36 des Arretierbolzens 15 in Schließstellung S eingreifen.

Aus Fig. 12 ist ersichtlich, daß der Lagerbolzen 20, welcher die Öffnungen 44 und 45 des Endbereichs 2 bzw. 2' des Haltegriffs 1 und die Lagerstellen 8 und 9 des Lagerteils 3 durchsetzt, von einer Schraubenfeder 21 umgeben ist, welche sich einerseits an dem Quersteg 42 des Endbereichs 2 bzw. 2' des Haltegriffs 1 abstützt und andererseits den hinteren Bereich 34 des Lagerteils 3 beaufschlagt. Durch diese Feder 21 wird gewährleistet, daß im Bedarfsfall nach Loslassen des Handgriffs 1 in der Position A dieser aus der ausgeschwenkten Lage A in die in Fig. 2 dargestellte Ruhelage R zurückkehrt.

Um diese Rückkehrbewegung in die Position R zu dämpfen, ist ein gegen die Feder 21 wirkender, schematisch dargestellter sog. Rotationsdämpfer 60' vorgesehen. Hierdurch wird entweder durch ein virkoses Medium oder ein dämpfendes Material die Schwenkbewegung des Handgriffs verlangsamt.

Fig. 4 und 5 zeigen die Montage des Haltegriffs 1 an dem Träger 4: Der Haltegriff 1 ist bereits über den Lagerbolzen 20 und die Biegefeder 21 an dem Lagerteil 3 befestigt; der Arretierbolzen 15 ist nach Fig. 4 über einen kurzen Bereich mit seinem Hauptkörper 16 in die Durchgangsöffnung 17 des Lagerteils 3 eingeschoben. Der federnde Eingriffssteg 11 befindet sich in seiner Ruheposition, so daß es möglich ist, das Lagerteil 3 in die Öffnung 5 des Trägers einzuschieben.

Ist dieser Einschub nach Fig. 5 erfolgt, so lagert sich die Nut 24 des starren Eingriffselements 10 hinter die Trägeröffnung 4 und die Anschlagsfläche 23 beaufschlagt auf der gegenüberliegenden Seite den Träger 4. Nunmehr kann der Arretierbolzen 15 in Pfeilrichtung I mit seinem Hauptkörper 16 voll in die Durchgangsöffnung 17 eingeschoben werden, bis er sich in der Position nach Fig. 2 bzw. Fig. 3 befindet.

Hier liegt nun der federnde Eingriffssteg 11 in Spreizstellung S, d.h. die Eingriffsschulter 22 beaufschlagt die der Anschlagfläche 23 gegenüberliegende Seite des Trägers 4. Damit ist entsprechend Fig. 2 und 3 der Haltegriff 1 funktionssicher an dem Träger 4 befestigt und kann zwischen den Positionen R und A schwenken. In der montierten Position liegt die Abschlußplatte 19 des Arretierbolzens 15 an dem hinteren Bereich 34 des Lagerteils 3 an, so daß sich eine in sich geschlossene Einheit ergibt, welche die Schwenkbewegung des Haltegriffs 1 nicht behindert.

Durch die besondere Gestaltung des erfindungsgemäßen Haltegriffs ergibt sich eine rasche und funktionssichere Montage, wobei außerdem durch Schwenken des Haltegriffs eine raumsparende Anordnung geschaffen wird.

## Patentansprüche

1. Haltegriff aus Kunststoff, dessen beide Endbereiche jeweils über ein Lagerteil in einer Trägeröffnung befestigbar sind, wobei jedes Lagerteil mindestens einen die Trägeröffnung hintergreifenden, in Spreizstellung gehaltenen Rastbereich aufweist, **dadurch gekennzeichnet,**
**daß** das Lagerteil (3) als Rastbereich zwei einander gegenüberliegende Eingriffsstege (10, 11) aulweist, wobei der eine Eingriffssteg (11) federnd und der andere Eingriffssteg (10) starr ausgebildet ist,
**daß** der federnde Eingriffssteg (11) in Spreizstellung (S) durch einen gesicherten Arretierbolzen (15) die Trägeröffnung (5) hintergreift und
**daß** das Lagerteil (3) unterhalb der beiden Eingritfsstege (10, 11) mit zwei im Abstand voneinander angeordneten Lagerstellen (8, 9) für einen die Endbereiche des zumindest teilweise schwenkbar ausgebildeten Haltegriffs (1) durchsetzenden, federbeaufschlagten Lagerbolzen (20) versehen ist,
**daß** der federnde Eingriffssteg (11) unterhalb des starren Eingriffsstegs (10) angeordnet ist, und
**daß** das Lagerteil (3) gegenüberliegend einer Eingriffsschulter (22) des federnden Eingriffssteges (11) eine in Schließstellung an dem Träger (4) anliegende Anschlagfläche (23) aufweist und daß der starre Eingriffssteg (10) endseitig mit einer auf die Dicke des Trägers (4) abgestellten Nut (24) versehen ist.

2. Haltegriff nach Anspruch 1,
**dadurch gekennzeichnet,**
**daß** das Lagerteil (3) an der den Eingriffselementen (10, 11) abgewandten, von dem jeweiligen Endbereich (2, 2') überdeckbaren Seite mindestens einen Anschlagbereich (30) zur Drehbegrenzung des Haltegriffs (1) aufweist.

3. Haltegriff nach Anspruch 2,
**dadurch gekennzeichnet,**
**daß** jeder Endbereich des Haltegriffs eine obere Anschlagschulter (31) und eine untere gewölbte, im Bereich der Lagerstellen (2, 2') liegende Anschlagzone (32) aufweist, welche stirnseitig eine Gegenfläche (33) des Lagerteils (3) bei aufgeklapptem Haltegriff (1) beaufschlagt.

4. Haltegriff nach Anspruch 2,
**dadurch gekennzeichnet,**
**daß** jeder Endbereich des Haltegriffs (1) mit einer Ausnehmung (25) versehen ist, in welcher der mit dem Anschlagbereich (30) versehene hintere Bereich (26) des jeweiligen Lagerteils (3) aufnehmbar ist.

5. Haltegriff nach Anspruch 3 und 4,
**dadurch gekennzeichnet,**
**daß** die Ausnehmung (25) in die gewölbte Anschlagzone (32) übergeht und deren Stirnfläche eine Gegenfläche (33) des Lagerteils (3) bei ausgeklapptem Haltegriff (1) beaufschlagt.

6. Haltegriff nach einem der vorhergehenden Ansprüche,
**dadurch gekennzeichnet,**
**daß** das Lagerteil (3) zwischen dem federnden und dem starren Eingriffssteg (10, 11) eine rechteckige Durchgangsöffnung (17) zur Einlagerung des im Querschnitt rechteckigen Hauptkörpers (16) des Arretierbolzens (15) aufweist.

7. Haltegriff nach Anspruch 6,
**dadurch gekennzeichnet,**
**daß** der Hauptkörper (16) des Arretierbolzens (15) endseitig mit einer an dem hinteren Bereich (34) des Lagerteils (3) anliegenden Abschlußplatte (19) versehen ist.

8. Haltegriff nach Anspruch 6 und 7,
**dadurch gekennzeichnet,**
**daß** der Hauptkörper (16) längsseitig jeweils federnde, in einer Rast des Lagerteils (3) einlagerbare Arretierzungen (35 36) aufweist.

9. Haltegriff nach Anspruch 8,
**dadurch gekennzeichnet,**
**daß** die Arretierzungen (35, 36) verschiedene Längen aufweisen.

10. Haltegriff nach einem der vorhergehenden Ansprüch,
**dadurch gekennzeichnet,**
**daß** der Lagerbolzen (20) mit einem die Schwenkbewegung des Haltegriffs (1) dämpfenden Rotationsdämpfer (60) verbunden ist.

## Claims

1. Plastic handgrip whose two end regions can be fastened in a support opening in each case via a bearing part, each bearing part having at least one latching region which grips the support opening from behind and is retained in an expanded position, **characterized in that** as the latching region the bearing part (3) has two engagement webs (10, 11) which lie opposite each other, one engagement web (11) being of a resilient design and the other engagement web (10) being of a rigid design, **in that** in the expanded position (S) the resilient engagement web (11) grips the support opening (5) from behind by means of a secured locking bolt (15), and **in that** below the two engagement webs (10, 11) the bearing part (3) is provided with two bearing points (8, 9) which are arranged spaced apart from each other and are intended for a spring-loaded bearing bolt (20) which passes through the end regions of the handgrip (1) which is of an at least partially pivotable design, **in that** the resilient engagement web (11) is arranged below the rigid engagement web (10) **in that** opposite an engagement shoulder (22) of the resilient engagement web (7) the bearing part (3) has a stop surface (23), which in the closed position bears against the support (4), and **in that** the rigid engagement web (10) is provided on the end side with a groove (24) which is tailored to the thickness of the support (4).

2. Handgrip according to Claim 1, **characterized in that** the bearing part (3) has, on the side which faces away from the engagement elements (10, (11) and which can be covered by the particular end region (2, 2'), at least one stop region (30) for restricting the rotation of the handgrip (1).

3. Handgrip according to Claim 2, **characterized in that** each end region of the handgrip has an upper stop shoulder (31) and a lower curved stop zone (32) which lies in the region of the bearing points (2, 2') and acts at the front end upon a mating surface (33) of the bearing part (3) when the handgrip (1) is swung up.

4. Handgrip according to Claim 2, **characterized in that** each end region of the handgrip (1) is provided with a recess (25) in which the rear region (26), which is provided with the stop region (30), of the particular bearing part (3) can be held.

5. Handgrip according to Claim 3 and 4, **characterized in that** the recess (25) merges into the curved stop zone (32) and its end surface acts upon a mating surface (33) of the bearing part (3) when the handgrip (1) is swung out.

6. Hand grip according to one of the preceding claims, **characterized in that** between the resilient and the rigid engagement webs (10, 11) the bearing part (3) has a rectangular through-opening (17) for the insertion of the cross-sectionally rectangular main body (16) of the locking bolt (15).

7. Handgrip according to Claim 6, **characterized in that** the main body (16) of the locking bolt (15) is provided on its end side with a closing plate (19) which bears against the rear region (34) of the bearing part (3).

8. Handgrip according to Claim 6 and 7, **characterized in that** the main body (16), on its longitudinal sides, has locking tongues (35, 36) which are in each case resilient and can be inserted into a latch in the bearing part (3).

9. Handgrip according to Claim 8, **characterized in that** the locking tongues (35, 36) differ in length.

10. Handgrip according to one of the preceding claims, **characterized in that** the bearing bolt (20) is connected to a rotational damper (60) which damps the pivoting movement of the handgrip (1).

## Revendications

1. Poignée en matière plastique, dont les deux régions terminales sont susceptibles d'être fixées à l'aide d'une partie de montage respective dans une ouverture de support, chacune desdites parties de montage comprenant au moins une zone d'enclenchement en engagement avec l'ouverture de montage par l'arrière et maintenue dans une position d'écartement,
**caractérisée en ce que**
la partie de montage (3) comporte à titre de zone d'enclenchement deux barrettes d'engagement mutuellement opposées (10, 11), l'une desdites barrettes d'engagement (11) étant réalisée avec faculté de se déformer élastiquement et l'autre barrette d'engagement (10) étant réalisée de façon rigide,
la barrette d'engagement élastique (11) engage, dans la position d'écartement (S), l'ouverture de support (5) par l'arrière au moyen d'un goujon d'arrêt (15) bloqué, et
la partie de montage (3) est pourvue de deux emplacements de montage (8, 9), au-dessous des deux barrettes d'engagement (10, 11) et agencés à distance l'un de l'autre, pour un goujon de montage (20) sollicité par un ressort et traversant les zones terminales de la poignée (1), celle-ci étant réalisée de façon à pouvoir au moins partiellement basculer,
la barrette d'engagement élastique (11) est agencée au-dessous de la barrette d'engagement rigide (10), et
la partie de montage (3) présente une surface de butée (23), à l'opposé d'un épaulement d'engagement (22) de la barrette d'engagement élastique (11), ladite surface étant appliquée contre le support (4) dans la position de fermeture, et **en ce que** la barrette d'engagement rigide (10) est pourvue du côté extrémité d'une gorge (24) en retrait de l'épaisseur du support (4).

2. Poignée selon la revendication 1, **caractérisée en ce que** la partie de montage (3) comprend, sur le côté détourné des éléments d'engagement (10, 11) et susceptible d'être recouvert par la zone terminale respective (2, 2'), au moins une zone de butée (30) destinée à limiter la poignée (1) en rotation.

3. Poignée selon la revendication 2, **caractérisée en ce que** chaque zone terminale de la poignée comprend un épaulement de butée supérieur (31) et une zone de butée bombée inférieure (32), située dans la région des emplacements de montage (2, 2'), ladite zone de butée venant attaquer du côté frontal une contre-surface (33) de la partie de montage (3) lorsque la poignée (1) est basculée en ouverture.

4. Poignée selon la revendication 2, caractérisée en ce chaque zone terminale de la poignée (1) est dotée d'un évidement (25), dans lequel peut être reçue la région postérieure (26), dotée de la zone de butée (30), de la partie de montage respective (3).

5. Poignée selon les revendications 3 et 4, **caractérisée en ce que** l'évidement (25) se transforme dans la zone de butée bombée (32), et **en ce que** sa surface frontale attaquer une contre-surface (33) de la partie de montage (3) lorsque la poignée (1) est basculée en ouverture.

6. Poignée selon l'une des revendications précédentes, **caractérisée en ce que** la partie de montage (3) comprend, entre la barrette d'engagement élastique et la barrette d'engagement rigide (10, 11), une ouverture de passage rectangulaire (17) pour le montage du corps principal (16), de section rectangulaire, du goujon de blocage (15).

7. Poignée selon la revendication 6, **caractérisée en ce que** le corps principal (16) du goujon de blocage (15) est pourvu du côté extrémité d'une plaque de terminaison (19) appliquée contre la zone postérieure (34) de la partie de montage (3).

8. Poignée selon les revendications 6 et 7, **caractérisée en ce que** le corps principal (16) comprend, sur son côté longitudinal, des languettes de blocage (35, 36) respectives élastiques, susceptibles de s'engager dans une élément d'enclenchement de la partie de montage (3).

9. Poignée selon la revendication 8, **caractérisée en ce que** les languettes de blocage (35, 36) ont des longueurs différentes.

10. Poignée selon l'une des revendications précédentes, **caractérisée en ce que** le goujon de montage (20) est relié à un amortisseur de rotation (60) qui amortit le mouvement de basculement de la poignée (1).
